# EUROPÄISCHE PATENTSCHRIFT

(11) **EP 0 932 856 B1**
(45) Veröffentlichungstag und Bekanntmachung des Hinweises auf die Patenterteilung: **27.12.2000**
(21) Anmeldenummer: 97948912.7
(22) Anmeldetag: 15.10.1997
(51) Int. Cl.: G05B 11/06

(54) **Regelkreis zur Regelung von wenigstens zwei Regelgrössen**
Control loop for controlling at least two controlled variables
Boucle d'asservissement pour contrôler au moins deux grandeurs regulées

(30) Priorität: 15.10.1996 DE 19642443
(43) Veröffentlichungstag der Anmeldung: 04.08.1999
(73) Patentinhaber: ALCATEL, 75008 Paris (FR)
(72) Erfinder: FEUSTEL, Hans-Peter, D-91154 Roth (DE)
(74) Vertreter: Müller, Joachim, Dipl.-Ing.
(86) Internationale Anmeldenummer: EP9706378
(87) Internationale Veröffentlichungsnummer: WO9816879

(56) Entgegenhaltungen:
- EP-A- 0 057 477
- GB-A- 2 151 820

## Beschreibung

In vielen Anwendungsbereichen werden anstelle von unidirektional wirkenden Steuerungen zunehmend rückgekoppelte Regelverfahren eingesetzt, bsp. im Kfz-Bereich als Regelverfahren für (insbesondere sicherheitsrelevante) Fahrfunktionen (Getriebe, Kupplung, ABS, Airbag etc.) oder für Komfortfunktionen (Fensterheber, Schiebedach, Wegfahrsperre etc.). Bei einem Regelverfahren wird mittels eines Regelkreises aus einer das Regelverhalten beeinflussenden Regeleinrichtung und einer die Rückkopplung bewirkenden Regelstrecke der Istwert einer Regelgröße (die zu regelnde physikalische Größe) mit dem vorgegebenen Sollwert der Regelgröße verglichen, und eine Abweichung zwischen Sollwert und Istwert (die Regelabweichung bzw. die Regeldifferenz als negative Regelabweichung) mit Hilfe einer auf die Regelgröße einwirkenden Stellgröße minimiert. Mittels einer dem Regelkreis extern zugeführten Führungsgröße kann der Sollwert der Regelgröße (die sollwertvorgabe) variiert werden.

In Abhängigkeit der vorgesehenen Anwendung des Regelverfahrens kann die Regeleinrichtung mittels verschiedener Regler realisiert werden, die beim Auftreten einer Regelabweichung bzw. Regeldifferenz ein unterschiedliches Regelverhalten bewirken; bsp. sind Proportionalregler, Integralregler, Differentialregler, Linearregler oder schaltbare Stufenregler gebräuchlich. Um die Belastung der Regeleinrichtung zu reduzieren, kann diese aus mehreren Reglern aufgebaut werden, die üblicherweise als schaltbare Stufenregler ausgebildet sind und bsp. durch schaltvorgänge aktiviert und deaktiviert werden. Problematisch hierbei ist (Insbesondere bei Stutenreglern) die Abgrenzung der Wirkungsbereiche der verschiedenen Regler, d.h der Übergang zwischen den Regelbereichen der Regler ist nicht eindeutig definiert; die Folge hiervon sind Störungen der Regelung bzw. des Regelverhaltens (Auftreten von Totbereichen, Überlappungen, Hysteresen, undefinierten Zuständen etc.) und EMV-Störungen, zu deren Reduzierung kostenintensive Bauelemente erforderlich sind.

Der Erfindung liegt die Aufgabe zugrunde, einen einfachen Regelkreis gemäß dem Oberbegriff des Patentanspruchs 1 anzugeben, bei dem diese Nachteile vermieden werden und der demgegenüber vorteilhafte Eigenschaften aufweist.

Diese Aufgabe wird erfindungsgemäß durch die Merkmale im Kennzeichen des Patentanspruches 1 gelöst.

Beim vorgestellten Regelkreis wird der Maximalwert der den Sollwert der Regelgröße (die Sollwertvorgabe) bestimmende Führungsgröße anhand der Regelgrenzen der einzelnen kaskadierten Regler des Regelkreises festgelegt, indem der Maximalwert der Führungsgröße durch die Summe der Regelgrenzen der Regler des Regelkreises bestimmt wird. Die Führungsgröße wird den einzelnen Reglern des Regelkreises unterschiedlich zugeführt, so daß die Regler des Regelkreises mit unterschiedlichen Sollwerten der Regelgröße bzw. mit unterschiedlichen anhand von Sollwert und Istwert der Regelgröße generierten Regeldifferenzen beaufschlagt werden: als Sollwert zur Bildung der Regeldifferenz wird für einen ersten Regler die Führungsgröße und für die weiteren Regler die Regeldifferenz des jeweils vorhergehenden Reglers (d.h. für den zweiten Regler die Regeldifferenz des ersten Reglers, für den drittten Regler die Regeldifferenz des zweiten Reglers etc.) herangezogen; somit wird als Sollwert für den zweiten Regler die Führungsgröße minus dem Istwert der Regelgröße des ersten Reglers, für den Sollwert des dritten Reglers die Führungsgröße minus dem Istwert der Regelgröße des ersten Reglers minus dem Istwert der Regelgröße des zweiten Reglers vorgegeben etc. Entsprechend ergibt sich hieraus die Regeldifferenz, mit der der Jeweilige Regler des Regelkreises beaufschlagt wird, als Differenz aus diesem vorgegebenen Sollwert und dem Istwert der Regelgröße des jeweiligen Reglers.

Die kaskadierten Regler des Regelkreises werden aufgrund dieser Vorgabe unterschiedlicher Sollwerte bzw der hierdurch gebildeten Regeldifferenzen sukzessive aktiviert bzw. wirksam: Bei einer von Null ansteigenden Führungsgröße (Sollwertvorgabe für die Regelgröße) ist zunächst nur der erste Regler aktiviert; der zweite Regler ist deaktiviert, da für ihn als Sollwert die (zu Null gemachte) Regeldifferenz des ersten Reglers vorgegeben wird, ebenso sind die ggf. vorhandenen weiteren Regler deaktiviert, da beim zweiten Regler und bei keinem der nachfolgenden Regler eine Regeldifferenz auftritt. Der erste Regler regelt die Regelgröße entsprechend der Vorgabe durch die Führungsgröße solange alleine, bis seine Regelgrenze erreicht ist (d.h. bis er ausgesteuert bzw. "gesättigt" ist); bei einer weiteren Erhöhung der Führungsgröße (der Sollwertvorgabe für die Regelgröße) kann der erste Regler dieser Sollwertvorgabe nicht mehr folgen (d.h. die Regelung der Regelgröße nicht mehr durchführen), es tritt somit eine Regeldifferenz auf. Der mit eben dieser Sollwertvorgabe als Regeldifferenz beaufschlagte zweite Regler wird demzufolge "aktiviert" und übernimmt den vom ersten Regler nicht mehr regelbaren Anteil der Regelgröße (die ggf. vorhandenen weiteren Regler sind weiterhin deaktiviert, da die Regeldifferenz des zweiten Reglers Null ist). Bei einer weiteren Erhöhung der Führungsgröße (der Sollwertvorgabe für die Regelgröße) erreicht schließlich auch der zweite Regler seine Regelgrenze; aufgrund der hierdurch auftretenden Regeldifferenz beim zweiten Regler (diese entspricht, der Sollwertvorgabe zur Rildung der Regeldifferenz für den dritten Regler) wird demzufolge der dritte Regler aktiviert, der den vom zweiten Regler nicht mehr regelbaren Anteil der Regelgröße übernimmt. Bei einer weiteren Erhöhung der Führungsgröße (der Sollwertvorgabe für die Regelgröße) werden die weiteren Regler des Regelkreises sukzessive aktiviert und übernehmen analog hierzu den von den vorhergehenden Reglern nicht mehr regelbaren Anteil der Regelgröße (für den letzten Regler des Regelkreises wird als Sollwertvorgabe zur Generierung seiner Regeldifferenz die Regeldifferenz des vorletzten Reglers herangezogen). Die Regelgröße kann auf diese Weise kontinuierlich bis zu ihrem durch den Maximalwert der Führungsgröße bestimmten Maximalwert geregelt werden, da die Regelgrenze des letzten Reglers der Regeleinrichtung beim Maximalwert der Regelgröße erreicht wird.

Zur Vorgabe der unterschiedlichen Sollwerte und damit zur Generierung der unterschiedlichen Regeldifferenzen für die verschiedenen Regler des Regelkreises kann eine Vergleichsstufe mit mehreren Vergleichselementen vorgesehen werden; jedem Regler ist dabei ein Vergleichselement zur Generierung der jeweiligen Regeldifferenz zugeordnet, dem der Istwert der Regelgröße des jeweiligen Reglers und der unterschiedlich vorgegebene Sollwert zugeführt wird.

Die Regler des Regelkreises können vorzugsweise mittels Linearreglern realisiert werden, die einen stetigen Regelverlauf bis zu ihrer Regelgrenze aufweisen.

Die Vorteile des Regelkreises bestehen darin, daß
- als Regler des Regelkreises beliebige Regler mit unterschiedlichen Regelgrenzen und unterschiedlichem Regelverhalten eingesetzt werden können,
- durch die als Regeldifferenz des jeweils vorhergehenden Reglers gewählte Sollwertvorgabe der weiteren Regler des Regelkreises die Regelung völlig unabhängig von Toleranzen der Komponenten des Regelkreises, der Dimensionierung der Regelstrecke und dem Wert der Versorgungsspannung des Regelkreises ist,
- immer nur jeweils einer der Regler des Regelkreises im Regelbetrieb betrieben wird (die anderen Regler sind deaktiviert oder ausgesteuert), so daß der Regelkreis einen geringen Leistungsbedarf aufweist,
- der übergang zwischen den verschiedenen Regelbereichen kontinuierlich erfolgt; demzufolge treten keine Schaltvorgänge auf und auch keine durch Schaltvorgänge bedingte Störungen der Regelung (Auftreten von Totbereichen, Überlappungen, Hysteresen, undefinierten Zuständen etc.).
- EMV-Störungen weitgehend vermieden werden, so daß keine kostenintensiven Bauelemente zur Verringerung der EMV-Problematik benotigt werden.

Im folgenden wird als Ausführungsbeispiel ein Regelkreis mit einer Regeleinrichtung aus drei kaskadierten parallelgeschalteten Linearreglern im Zusammenhang mit der Zeichnung (Figuren 1 bis 3) beschrieben. Es zeigen:
- Figur 1: ein Prinzipschaltbild eines Regelkreises, nach dem Stand der Technik,
- Figur 2: Schaltbild eines erfindungsgemäßen Regelkrelses,
- Figur 3: ein Diagramm zur Veranschaulichung des Regelverhaltens.

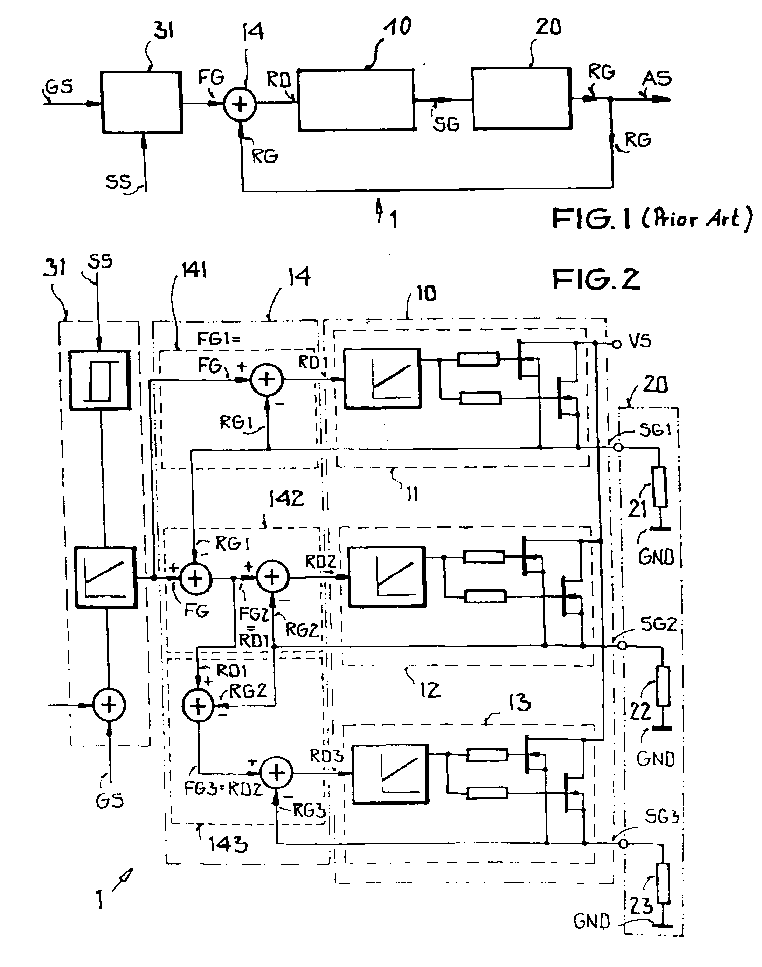

Gemäß der Figur 1 wird innerhalb eines Regelkreises 1 aus Regeleinrichtung 10, Regelstrecke 20 und Sollwerteinsteller 31 die Regelgröße RG mittels einer Stellgröße SG geregelt. Vom (bsp. durch das Steuersignal SS aktivierbaren und deaktivlerbaren) Sollwerteinsteller 31 wird (bsp. mittels eines extern zugeführten steuersignals GS) die Führungsgröße FG erzeugt und diese Führungsgröße FG als Sollwertvorgabe der Regelgröße RG der Vergleichsstufe 14 zugeführt; von der Vergleichsstufe 14 wird die Führungsgröße FG als Sollwertvorgabe der Regelgröße RG mit dem (rückgeführten) Istwert der Regelgröße RG verglichen und anhand dieses Vergleichs die Regeldifferenz RD bzw. die Regelabweichung gebildet. Diese Regeldifferenz RD wird der Regeleinrichtung 10 zugeführt und von dieser Regeleinrichtung 10 die Stellgröße SG generiert. Mittels der StellGröße SG wird die Regelstrecke 20 beaufschlagt und von dieser ein bestimmter Istwert der Regelgröße RG erzeugt. Dieser Istwert der Regelgröße RG wird zum einem am Ausgang des Regelkreises 1 als Ausgangsgröße AS ausgegeben und zum andern in einer Rückkopplungsschleife des Regelkreises 1 der Vergleichsstufe 14 zugeführt.

Gemäß Figur 2 ist erfindungsgemäß die Regelstrecke 20 mittels dreier parallelgeschalteter Regelelemente 21, 22, 23 realisiert, die bsp. als Widerstände ausgebildet sind und zwischen der Versorgungsspannung (bsp. + 12 V) und Bezugspotential geschaltet sind (in diesem Fall sind Stellgröße SG und Regelgröße RG identisch). Bei der mittels der drei parallelgeschalteten Linearreglern 11, 12, 13 realisierten Regeleinrichtung 10 ist jeder Ausgang eines Linearreglers 11, 12, 13 mit dem Eingang eines der Regelelemente 21, 22, 23 verbunden, die demzufolge jeweils mit einer bestimmten Stellgröße SG1, SG2, SG3 beaufschlagt werden. Die rückgeführten Regelgrößen RG1, RG2, RG3 der Linearregler 11, 12, 13 werden mittels der aus drei Vergleichselementen 141, 142, 143 bestehenden Vergleichsstufe 14 mit dem jeweils zugeführten Sollwert der Regelgröße RG derart verglichen, daß jeder Linearregler 11, 12, 13 einen anderen Regelbereich aufweist (die Vergleichsstufe 14 mit den Vergleichselementen 141, 142, 143 kann auch als Teil der Regeleinrichtung 10 ausgebildet sein). Durch die spezielle Ausgestaltung der Vergleichselemente 141, 142, 143 der Vergleichsstufe 14 werden die parallelgeschalteten kaskadierten Linearregler 11, 12, 13 der Regeleinrichtung 10 mit unterschiedlichen, anhand der Differenz aus jeweiliger Führungsgröße FG1, FG2, FG3 (Sollwert) und jeweiliger Regelgröße RG1, RG2, RG3 (Istwert) generierten Regeldifferenzen RD1, RD2, RD3 beaufschlagt:
- der erste Linearregler 11 mit der Regeldifferenz RD1 als Differenz aus der Führungsgröße FG als Führungsgröße FG1 und dem Istwert RG1 der Regelgröße RG des ersten Linearreglers 11,
- der zweite Linearregler 12 mit der Regeldifferenz RD2 als Differenz aus der Regeldifferenz RD1 des ersten Linearreglers 11 als Führungsgröße FG2 (Führungsgröße FG minus Istwert RG1 der Regelgröße RG des ersten Linearreglers 11) und dem Istwert RG2 der Regelgröße RG des zweiten Linearreglers 12,
- der dritte Linearregler 13 mit der Regeldifferenz RD3 als Differenz aus der Regeldifferenz RD2 des zweiten Linearreglers 12 als Führungsgröße FG3 (Führungsgröße FG minus Istwert RG1 der Regelgröße RG des ersten Linearreglers 11 minus Istwert RG2 der Regelgröße RG des zweiten Linearreglers 12) und dem Istwert RG3 der Regelgröße RG des dritten Linearreglers 13

Der Maximalwert der Führungsgröße FG wird anhand der Summe der Regelgrenzen der einzelnen Linearregler 11, 12, 13 und damit anhand des Maximalwerts der Regelgröße RG vorgegeben. Die Führungsgröße FG wird mittels des Sollwerteinstellers 31 bsp. in Abhängigkeit des extern zugeführten Steuersignals GS variiert. Mittels eines dem Sollwerteinsteller 31 zugeführten Steuersignals SS wird der Regelkreis 1 freigegeben oder gesperrt (die Regelung aktiviert oder deaktiviert).

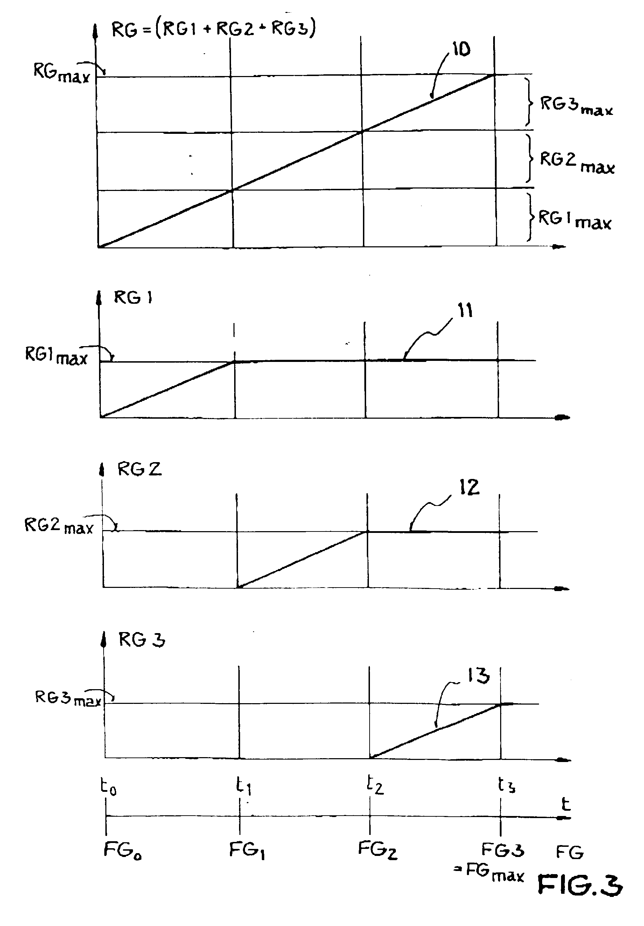

In der Figur 3 ist der zeitliche Verlauf der Regelgrößen RG1, RG2, RG3 der ein zelnen Linearregler 11, 12, 13 der Regeleinrichtung 10 und der zeitliche Verlauf der Regelgröße RG (Gesamtregelverlauf) der Regeleinrichtung 10 bei einer von Null beginnenden kontinuierlichen Erhöhung der Führungsgröße FG bis zu ihrem Maximalwert FGₘₐₓ dargestellt.

Aufgrund der Vorgabe unterschiedlicher Regeldifferenzen RD1, RD2, RD3 werden die parallelgeschalteten kaskadierten Linearregler 11, 12, 13 der Regeleinrichtung 10 bei dieser kontinuierlichen Erhöhung der Führungsgröße FG sukzessive aktiviert und bestimmen hierdurch auch sukzessive den Verlauf der als Summe der Regelgrößen RG1, RG2, RG3 der Linearregler 11, 12, 13 gebildeten Regelgröße RG (RG = RG1 + RG2 + RG3):
- zum Zeitpunkt t₀ (hier erreicht die Führungsgröße FG den Schwellwert FG₀) wird der erste Linearregler 11 aktiviert
- bei einer Erhöhung der Führungsgröße FG (die Führungsgröße FG überschreitet den Schwellwert FG₀) wird der Gesamtregelverlauf (die Regelgröße RG) alleine vom ersten Linearregler 11 (RegelgröBe RG1) bestimmt; der zweite Linearregler 12 und der dritte Linearregler 13 sind deaktiviert, da die Regeldifferenz RD1 des ersten Linearreglers 11 Null beträgt
- zum Zeitpunkt t₁ (hier erreicht die Führungsgröße FG den Wert FG₁) wird die Regelgrenze RG1ₘₐₓ des ersten Linearreglers 11 erreicht (der Maximalwert RG1ₘₐₓ der Regelgröße RG1 des ersten Linearreglers 11) und der erste Linearregler 11 ausgesteuert; hierdurch wird der zweite Linearregler 12 aktiviert
- bei einer Erhöhung der Führungsgröße FG (die Führungsgröße FG überschreitet den Wert FG₁) wird die Regeldifferenz RD1 des ersten Linearreglers 11 von Null verschieden und daher der Gesamtregelverlauf (die Regelgröße RG) vom ersten Linearregler 11 (Regelgröße RG1) und vom zweiten Linearregler 12 (Regelgröße RG2) bestimmt (der zweite Linearregler 12 übernimmt den vom ersten Linearregler 11 nicht mehr regelbaren Anteil der Regelgröße RG); der dritte Linearregler 13 ist deaktiviert, da die Regeldifferenz RD2 des zweiten Linearreglers 12 Null ist
- zum Zeitpunkt t₂ (hier erreicht die Führungsgröße FG den Wert FG₂) wird die Regelgrenze RG2ₘₐₓ des zweiten Linearreglers 12 erreicht (der Maximalwert RG2ₘₐₓ der Regelgröße RG2 des zweiten unearreglers 12) und der zweite Linearregler 12 ausgesteuert; hierdurch wird der dritte Linearregler 13 aktiviert.
- bei einer Erhöhung der Führungsgröße FG (die Führungsgröße FG überschreitet den wert FG₂) wird die Regeldifferenz RD2 des zweiten Linearreglers 12 von Null verschieden und daher der Gesamtregelverlauf (die Regelgröße RG) vom ersten Linearregler 11 (Regelgröße RG1), vom zweiten Linearregler 12 (Regelgröße RG2) und vom dritten Linearregler 13 (Regelgröße RG3) bestimmt (der dritte Linearregler 13 übernimmt den vom ersten Linearregler 11 und vom zweiten Linearregler 12 nicht mehr regelbaren Anteil der Regelgröße RG)
- zum Zeitpunkt t₃ (hier erreicht die Führungsgröße FG den wert FG₃ bzw. ihren Maximalwert FGₘₐₓ) wird die Regelgrenze RG3ₘₐₓ des dritten Linearreglers 13 erreicht (der Maximalwert RG3ₘₐₓ der Regelgröße RG3 des dritten Linearreglers 13) und damit auch die Regelgrenze RGₘₐₓ der Regeleinrichtung 10 (der Maximalwert RGₘₐₓ der Regelgröße RG).

Wie der Figur 3 zu entnehmen ist, wird jeweils nur einer der Linearregler 11, 12, 13 der Regeleinrichtung 10 im Linearbetrieb betrieben, so daß bei einer Variation der Führungsgröße FG eine kontinuierliche Regelung der Regelgröße RG ohne Unstetigkeiten (Hysterese, Sprungstellen), Totbereiche oder Überlappungen erfolgt.

Die Werte FG₁, FG₂ und FG₃ der Führungsgröße FG sind vom Aufbau bzw. Typ des jeweiligen Reglers abhängig und ergeben sich dadurch, daß der bis dort wirksame Regler seinen vorgegebenen Sollwert nicht mehr ausregeln kann (d.h. seine Reglergrenze erreicht).

## Patentansprüche

1. Regelkreis (1) zur Regelung von wenigstens zwei Regelgrößen (RG1, RG2, RG3), die von einer entsprechenden Zahl von Regelstrecken (21, 22, 23) erzeugt werden, **gekennzeichnet durch** wenigstens zwei in einer Reihe angeordnete Regler (11, 12, 13) zur Regelung von jeweils einer Regelgröße (RG1, RG2, RG3), wobei die wenigstens zwei Regler so im Regelkreis verschaltet sind, daß
a) jeder der wenigstens zwei Regler mit einer Regeldifferenz (RD1, RD2, RD3) beaufschlagbar ist, die gleich der Differenz ist zwischen einem Sollwert und dem Istwert der Regelgröße (RG1, RG2, RG3) des jeweiligen Reglers (11, 12, 13), und daß
b) dem ersten Regler (11) in der Reihe als Sollwert eine Führungsgröße (FG) zuführbar ist, deren Maximalwert (FGₘₐₓ) gleich der Summe der oberen Regelgrenzen (RG1ₘₐₓ, RG2ₘₐₓ, RG3ₘₐₓ) der mindestens zwei Regler ist, und daß
c) dem wenigstens einen in der Reihe folgenden Regler (12, 13) als jeweiliger Sollwert die Regeldifferenz (RD1, RD2) des in der Reihe vorhergehenden Reglers (11, 12) zugeführt wird.

## Claims

1. A control circuit (1) for controlling at least two controlled variables (RG1, RG2, RG3) which are generated by a corresponding number of controlled systems (21, 22, 23), characterised by at least two controllers (11, 12, 13), arranged in a row, in each case for the control of a control variable (RG1, RG2, RG3), wherein the at least two controllers are connected in the control circuit such that
a) each of the at least two controllers can be supplied with a control deviation (RD1, RD2, RD3) which is equal to the difference between a setpoint and the actual value of the controlled variable (RG1, RG2, RG3) of the relevant controller (11, 12, 13) and that
b) the first controller (11) in the row can be supplied with a reference variable (FG) as setpoint whose maximum value (FGₘₐₓ) is equal to the sum of the upper control limits (RG1ₘₐₓ, RG2ₘₐₓ, RG3ₘₐₓ) of the at least two controllers and that
c) the at least one controller (12, 13) following in the row is supplied with the control deviation (RD1, RD2) of the preceding controller (11,12) in the row as relevant setpoint.

## Revendications

1. Boucle de régulation (1) pour la régulation d'au moins deux grandeurs de régulation (RG1, RG2, RG3) qui sont produites par un nombre correspondant de systèmes de régulation (21, 22, 23), caractérisée par au moins deux régulateurs disposés en série (11, 12, 13) pour la régulation d'une grandeur de régulation (RG1, RG2, RG3), les deux régulateurs au moins étant câblés dans la boucle de régulation de telle sorte que
a) chacun des deux régulateurs au moins puisse être alimenté avec une différence de régulation (RD1, RD2, RD3) égale à la différence entre une valeur de consigne et la valeur réelle de la grandeur de régulation (RG2, RG2, RG3) de chacun des régulateurs (11, 12, 13) et que
b) on puisse amener au premier régulateur (11) de la série comme valeur de consigne une grandeur de référence (FG) dont la valeur maximale (FGₘₐₓ) est égale à la somme des limites de régulation supérieures (RG1ₘₐₓ, RG2ₘₐₓ, RG3ₘₐₓ) des deux régulateurs au moins, et que
c) on puisse amener au moins au régulateur suivant de la série (12, 13), comme valeur de consigne, la différence de régulation (RD1, RD2) du régulateur précédent dans la série (11, 12).
